# EUROPEAN PATENT APPLICATION

(11) **EP 2 369 365 A1**
(43) Date of publication of application: **28.09.2011**
(21) Application number: 11425068.1
(22) Date of filing: 21.03.2011
(51) Int. Cl.: G01S 13/87, G01S 13/02, G01S 13/74

(54) **Secondary radar system with sighting functionalities typical of primary radar systems**

(30) Priority: 22.03.2010 IT RM20100127
(71) Applicant: Selex Sistemi Integrati S.p.A., 00131 Roma (IT)
(72) Inventor: Mariano, Paolo, 00131 Roma (IT); Angelilli, Massimo, 00131 Roma (IT); Ricci, Claudio, 00131 Roma (IT)
(74) Representative: Iannone, Carlo Luigi

(57) **Abstract**

The invention concerns a radar for the control of civil aerial traffic, comprising a secondary radar (100) including a transmitter (110) and a receiver (120), and an antenna (500) of a secondary radar, wherein the signal at 1030 MHz, exiting the transmitter (110), is sent and transmitted into the air by the antenna (500), the antenna (500) receiving a response signal at 1090 MHz and a signal at 1030 MHz of reflection by aircraft, the signal at 1090 MHz being sent to the receiver (120), characterised in that it comprises a radar signal receiving and elaboration unit (200), said receiving and elaboration unit (200) receiving by said antenna (500) the reflection signal at 1030 MHz and being provided with means (300, 400) for the coherent elaboration of the same in order to extract the aircraft position.

## Description

The present invention concerns a secondary radar system, wholly operating in the framework of a system for the control of the air traffic, with additional sighting functionalities that are typical of the primary radar systems.

More precisely, the present invention concerns a secondary radar, complying with the ICAO standards ("International Civil Aviation Organization: Annex 10 vol.4 amend. 77"), to which an elaboration unit (i.e. a processing unit) is connected, which is able to process a 1030 MHz signal reflected by the aircrafts and calculate the 2D position of the same. The invention further concerns the same elaboration unit adapted to be used with any secondary radar.

The invention originates from the observation of the typical architectures, described in the bibliography of the application field, of the "primary" and "secondary" radars. It is to be mentioned that the both the two types of radar are normally present both in airport area and in the fixed and mobile defense systems. This because, in the civil field, the secondary radar works on the basis of a co-operative principle with the aircrafts, i.e. it transmits to them an interrogation code and receives from them a response code that can have various meanings: identity, altitude, etc. The primary radar transmits instead a signal and receives the same as reflected by the metallic structure of the aircrafts. The signal relevant to the secondary radar contains all the information content for the control of the air traffic and the signal relevant to the primary radar. In the case of failure of the aircraft responder, it guarantees in any case the knowledge of the position of the same.

In the military field instead the primary radar is normally active, which provides the position and the secondary radar is activated exclusively for the knowledge of the identity.

To the Inventors no solutions are known that allow the use of an only radar both as primary and as secondary radar, so as to provide a cheap and secure solution for the control of the air traffic.

It is object of the present invention to provide a secondary radar in which the functionalities of a primary radar are integrated, which solves the problems and overcomes the advantages of the prior art.

It is subject-matter of the present invention a radar for the control of civil aerial traffic, comprising a secondary radar including a transmitter and a receiver, and an antenna of a secondary radar, wherein the signal at 1030 MHz, exiting the transmitter, is sent and transmitted into the air by the antenna, the antenna receiving a response signal at 1090 MHz and a signal at 1030 MHz of reflection by aircraft, the signal at 1090 MHz being sent to the receiver, characterised in that it comprises a radar signal receiving and elaboration unit, said receiving and elaboration unit receiving by said antenna the reflection signal at 1030 MHz and being provided with means for the coherent elaboration of the same in order to extract the aircraft position.

Preferably according to the invention, said secondary radar comprises a RF circulator directly connected to the antenna, which sorts out and routes said received signals at 1090 MHz and 1030 MHz respectively towards the receiver ad towards the receiving and elaboration unit.

Preferably according to the invention, the receiving and elaboration unit comprises signal elaboration means which receive from said secondary radar a reference signal at 1030 MHz, taken from the transmitter, a signal that is a sample of the impulse being transmitted, in order to carry out a coherent elaboration of the reflected signal at 1030 MHz, as well as an elaboration digital board that exchanges one or more synchronization signals with said secondary radar.

The invention will be now described by way of illustration but not by way of limitation, with particular reference to the figures of the enclosed drawings, wherein:
- figure 1 shows a principle scheme of the secondary radar with the additional "primary" elaboration unit;
- figure 2 shows a scheme of an embodiment of the radar according to the invention.

The invention consists in adding, to a secondary radar, a 1030 MHz receiving and elaboration unit by which one obtains an additional surveillance passive channel.

As known, the secondary radar transmits exactly a signal at 1030 MHz in accordance with the standard as defined in the already cited document. Such a signal is then received by the same antenna of the secondary radar after reflection by the metallic structure of the aircraft. The antenna and the transmitter of the secondary radar will therefore be utilized both for the standard use and to emit signals at 1030 MHz that are not recognizable by the usual transponders. These signals, once reflected by the above-mentioned metallic structures of the aircraft, will reach the antenna and be processed by said unit that will extract from them the angular position and distance from the radar.

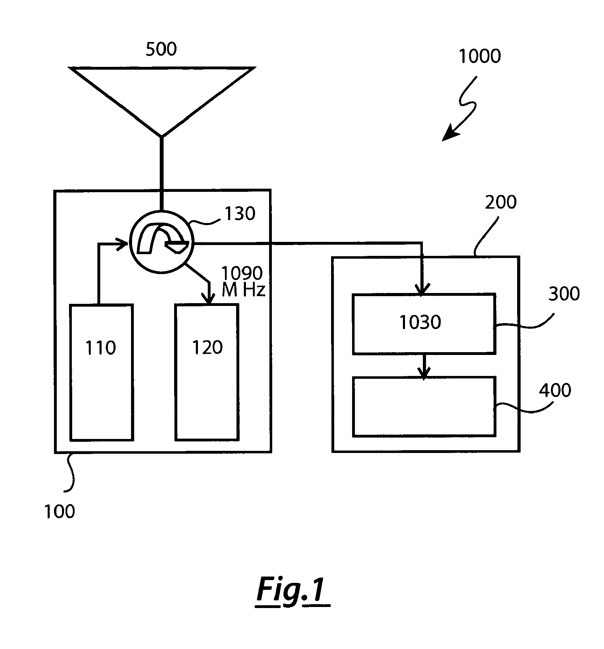

Figure 1 represents in a synthetic form the realization block diagram of the system 1000 of the invention. The system is composed by a secondary radar 100 and a unit 200 performing the functions of primary radar.

The signal at 1030 MHz, exiting the transmitter 110, through a RF circulator 130, is sent and transmitted into air by the antenna 500. The same signal, reflected by the aircrafts, will come back in the antenna 500 of the secondary radar, and, through the circulator 130, will reach the filter 300 at 1030 MHz that will let the signal pass towards an elaboration unit 400 of the primary radar.

The remaining part of the received signal, at 1090 MHz, is used as usually by the receiver 120 of the secondary radar and is processed to extract the information about the position and the information contents of the responses of the aircrafts to the interrogations of the secondary radar.

The two signals elaborated by the primary 300,400 and secondary 100 parts are thus made available for a downstream combined processing to obtain a data with high reliability and quality.

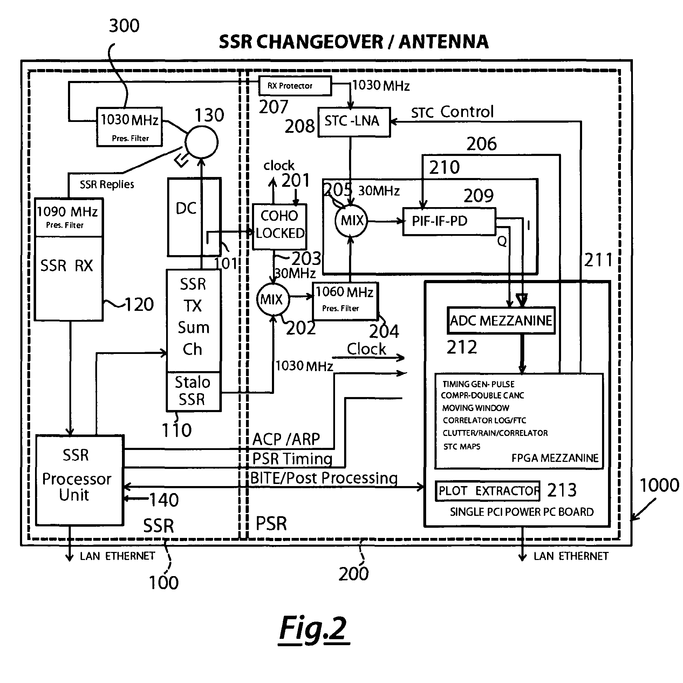

A possible way to realize the invention, by using an existing secondary radar, is hereafter described and represented in Figure 2.

The operating mode comprises the transmission of SSR interrogations (possibly integrated by PSR emissions interlinked to them) by using the same transmission frequency of the secondary radar, and the high duty cycle transmission channel that is present in the transmitter 110 of the secondary radar. From the same transmitter 110, the reference signal at 1030 MHz is drawn off, which will be used for the beating at the receiving stage for the conversion to IF in the mixer element 202.

The possible transmitted additional PSR signal will be constituted by a sequence of impulses with Barker coding, so as to guarantee around 22 dB of peak/lobes ratio. Such a signal is conceived in such a way not to constitute disturbance or interference with the signals usually used to operative ends for controlling the air traffic.

To guarantee the coherence between impulses transmitted by the secondary radar 100 and received by the primary radar 200, a coherent oscillator 201 is used which is locked-in by a signal that is a sample of the impulse being transmitted, detected by a coupler 101. The thus obtained signal 203 at 30 MHz is then mixed in the mixer 202 with a reference signal at 1030 MHz to obtain a frequency 1060 MHz to be used in the filter 204. Such a 1060 MHz frequency is used in the additional mixer 205 to convert the 1030 MHz signal coming from the antenna into a signal at intermediate frequency equal to 30 MHz. Such a signal at 1030 MHz comes first from the antenna 500, passes the circulator 130, the filter 300, a protection circuit 207 and a low-noise detection signal 208.

In such a way, one can perform an elaboration based on the phase (coherent elaboration).

A RF/IF 210 module realizes the above-mentioned beating, by means of a block 209 of IF amplification and phase detection, which generates the components with low-frequency I and Q in quadrature. Further, in this block 209, the automatic control of the gain is performed by means of control signals coming from the digital board 211.

In such digital board, two functions of signal elaboration functions and track extraction are performed. The board 211 will manage the generation of the synchronization signals needed for the functioning of the various described parts and in particular for the low-noise detection signal 208 ("STC"). The radar signal, after A/D conversion 212, and subsequent MTI radar elaboration, is elaborated by the extractor 213 and generates the data associated to each target, data that are useful to obtain the tracks after the combination with the data of the secondary radar coming from the elaboration unit 140.

In the system according to the invention, the functioning of the secondary radar will be modified only for the timing of the interrogations, whilst its algorithms and operative characteristics will not be altered or at most in a minimal way in the functions of control of the sections of interface with the processor of the primary radar 20.

An integrated control panel is a further system optimization (in the systems provided nowadays, separate control panels are utilized).

It is also possible to include in such architecture the function of combination/tracking, to be hosted in the secondary radar processor 140 or on the primary radar processor 213, therefore irrespective of the primary or secondary, given the wide margins at disposal in both cases for the calculation resources.

The system according to the invention allows therefore to have two important information by using an only secondary radar to which a specific elaboration unit is connected. The secondary radar always works exactly as it would without this elaboration unit, except that in the present case the signal reflected by the aircraft is utilized in order to obtain a position information that be consistent with the nowadays standards of civil air traffic control. In such a way, even if the response coming from the aircraft (transponder in failure, or screened for a maneuver or others) were not correctly received by the secondary radar, one would always have the information about the position of the aircraft, with qualitative features that are sufficient for the use in the control of air traffic.

In the system according to the invention, if one breaks the secondary radar, one can in any case exploit the echo coming from the aircraft to obtain the aircraft position information. On the contrary, if one breaks the module that performs the functions of primary radar, the functionality and the operativeness of the secondary radar are kept unchanged. One has therefore a synergistic effect on the reliability of the system. Moreover, even if the transponder does not works properly, one succeeds in identifying the position of the aircraft (that is extremely important if this failure occurs in a critical phase of the flight).

Besides, nowadays a secondary radar utilizes an antenna that allows the calculation of the angular position of the target by means of mono-pulse estimation algorithms (i.e. use of combinatory network of the antenna elements to obtain signals in reception (in the receiving stage) that are decorrelated and usable together for improving the accuracy of angular identification). This direction determination is integrally applied to the receiving channel of the primary radar (primary radar module), and therefore, also in the case of the primary radar elaboration, one obtains comparable accuracies.

The system according to the invention is ranked in the low-cost segment of the air traffic surveillance systems, a segment that is today covered by other types of systems.

The particular solution according to the invention, in the framework of a competitive bidding with specific requirements, not only allows to have at disposal a product that covers, and in some regards exceeds, the required performances, but that is undoubtedly competitive, thanks to a compact architecture that, using an only system, covers the functionalities formerly performed in a more complex and then expensive way.

The benefit in terms of costs becomes manifest in the providing of compact systems in the case that extreme performances in terms of primary coverage are not required and the main requirements are the transportability (the compactness plays a central role in this regard), the easiness of installation and use (the common antenna and the absence of waveguides make such processes extremely simple and fast), an easy maintenance (allowed e.g. by the use of plug-in modules with front-side extraction).

The recurring cost with respect to a traditional system is almost incomparable, but the comparison is further off-balance if the costs of the useful lifecycle are included as well, which is a benefit for the firm and is also advantageous for the client.

On an ATC standard system for controlling air traffic, which is constituted by a primary and a secondary radar, one can estimate a reduction of costs of the sensors of around a million euro and a further unneglectable reduction on the maintenance costs.

The preferred embodiments have been above described and some modifications of this invention have been suggested, but it should be understood that those skilled in the art can make variations and changes, without so departing from the related scope of protection, as defined by the following claims.

## Claims

1. Radar for the control of civil aerial traffic, comprising a secondary radar (100) including a transmitter (110) and a receiver (120), and an antenna (500) of a secondary radar, wherein the signal at 1030 MHz, exiting the transmitter (110), is sent and transmitted into the air by the antenna (500), the antenna (500) receiving a response signal at 1090 MHz and a signal at 1030 MHz of reflection by aircraft, the signal at 1090 MHz being sent to the receiver (120), **characterised in that** it comprises a radar signal receiving and elaboration unit (200), said receiving and elaboration unit (200) receiving by said antenna (500) the reflection signal at 1030 MHz and being provided with means (300, 400) for the coherent elaboration of the same in order to extract the aircraft position.

2. Radar according to claim 1, **characterised in that** said secondary radar (100) comprises a RF circulator (130) directly connected to the antenna (500), which sorts out and routes said received signals at 1090 MHz and 1030 MHz respectively towards the receiver (120) ad towards the receiving and elaboration unit (200).

3. Radar according to claim 1 or 2, **characterised in that** the receiving and elaboration unit (200) comprises signal elaboration means which receive from said secondary radar (100) a reference signal at 1030 MHz, taken from the transmitter (110), a signal that is a sample of the impulse being transmitted, in order to carry out a coherent elaboration of the reflected signal at 1030 MHz, as well as an elaboration digital board (211) that exchanges one or more synchronization signals with said secondary radar (100).
